# DEMANDE DE BREVET EUROPEEN

(11) **EP 1 529 723 A1**
(43) Date de publication de la demande: **11.05.2005**
(21) Numéro de dépôt: 04300756.6
(22) Date de dépôt: 04.11.2004
(51) Int. Cl.: B62D 65/00

(54) **Véhicule funéraire intégrant une coque rehausse galerie et son procédé d'installation**

(30) Priorité: 05.11.2003 FR 0313249
(71) Demandeur: Ducarme SA, 42350 La Talaudière (FR)
(72) Inventeur: Angin, Alain, 42290 Sorbiers (FR)
(74) Mandataire: Dupuis, François

(57) **Abrégé**

Ce véhicule est remarquable :
- en ce qu'il reçoit, autour de la zone découpée du pavillon (1a) initial, une structure porteuse (S) définie à partir de deux sous-ensembles (S1 - S2) réglables et ajustables l'un par rapport à l'autre pour définir une augmentation de hauteur intérieure du véhicule,
- et en ce que le sous-ensemble (S1) inférieur est fixé sur le pourtour périphérique (1d) de la partie toiture du véhicule autour de la découpe initiale et comprend une base d'appui (5) inférieure fixée le long du pourtour (1d) entourant la zone de découpe du pavillon,
- et en ce que le sous-ensemble (S2) est rapporté et fixé sur le sous-ensemble (S1) et est solidaire de la coque (C) formant réhausse-galerie, et comprend un cadre porteur (8), ladite coque présentant une forme périphérique extérieure s'ajustant et se fixant sur les parois du véhicule,
- et en ce que la base d'appui (5) et le cadre porteur (8) sont solidarisés entre eux de manière réglable en position.

## Description

L'invention se rattache au secteur technique des véhicules funéraires, de la carrosserie industrielle relative à la transformation et aménagement de véhicules.

Il est largement connu, dans les milieux professionnels considérés, que la conception de véhicules funéraires se fasse à partir de véhicules utilitaires qui sont transformés avec des opérations de découpe, de carrossage modifiant l'aspect du véhicule dans sa forme et volume en vue de sa nouvelle application. Cela nécessite, par exemple, des opérations de découpage du pavillon pour intégrer en substitution des pavillons support de galeries qui sont rendus solidaires par des opérations d'assemblage, de soudure, collage et autres traitements de fixation. Ainsi, le véhicule funéraire fini présente un aspect propre et le volume utile à l'intérieur du véhicule est défini par sa longueur et par rapport à la hauteur intérieure.

Ainsi, selon les modèles des véhicules, et leur marque d'origine, la hauteur intérieure des véhicules peut être de l'ordre de 600 mm, 940 mm. Dans ces variations qui sont importantes, le problème posé réside dans le fait que les véhicules dont la hauteur intérieure est faible, par exemple dans le cas de 600 mm, cela peut être une gêne pour la tenue et rangement des gerbes de fleurs. L'utilisation de véhicules dont la hauteur intérieure soit suffisamment importante requiert que la Société de services funéraires ait un parc de véhicules varié, ce qui est loin d'être le cas.

La démarche du demandeur a donc été de reconsidérer l'espace intérieur de certains types de véhicules dont la hauteur intérieure était considérée comme insuffisante et une gêne et limitation pour permettre à des entreprises de services funéraires de répondre aux besoins essentiels de leur clientèle. Ainsi, le but poursuivi par le demandeur a été de proposer, par un aménagement spécifique, un véhicule intermédiaire avec une hauteur intérieure plus appropriée en répondant ainsi plus largement aux besoins des utilisateurs.

La reconstruction du véhicule et son réaménagement avaient ainsi pour but d'augmenter la hauteur intérieure initiale mais aussi en permettant un réglage de cette hauteur pour la fourniture d'un véhicule plus approprié aux besoins des entreprises de services funéraires.

Selon une première caractéristique de l'invention, le véhicule funéraire du type agencé avec découpage de son pavillon initial de l'état de véhicule initial, est remarquable en ce qu'il reçoit, autour de la zone découpée du pavillon initial, une structure porteuse définie à partir de deux sous-ensembles réglables et ajustables l'un par rapport à l'autre pour définir une augmentation de hauteur intérieure du véhicule, et en ce que le sous-ensemble inférieur est fixé sur le pourtour périphérique de la partie toiture du véhicule autour de la découpe initiale et comprend une base d'appui inférieure fixée le long du pourtour entourant la zone de découpe du pavillon, et en ce que le sous-ensemble est rapporté et fixé sur le sous-ensemble et est solidaire de la coque formant réhausse galerie, et comprend un cadre porteur, ladite coque présentant une forme périphérique extérieure s'ajustant et se fixant sur les parois du véhicule, et en ce que, la base d'appui et le cadre porteur sont solidaires entre eux de manière réglable en position.

Ces caractéristiques et d'autres encore ressortiront bien de la suite de la description.

Pour fixer l'objet de l'invention illustrée d'une manière non limitative aux figures des dessins où :
- La figure 1 est une vue en plan d'un véhicule funéraire destiné à être réaménagé selon l'invention,
- La figure 2 est une vue en plan du véhicule, selon la figure 1, mais après enlèvement et découpe du pavillon initial,
- La figure 3 est une vue en plan du véhicule aménagé avec la réhausse selon l'invention,
- La figure 4 est une vue en perspective illustrant une structure porteuse susceptible d'être rapportée et constituant la réhausse galerie du véhicule, dans une première mise en oeuvre,
- La figure 5 est une vue arrière du véhicule intégrant le châssis selon l'invention,
- La figure 6 est une vue partielle et en coupe illustrant l'assemblage des sous-ensembles, selon l'invention, dans une seconde mise en oeuvre,
- La figure 7 est une vue partielle, selon la figure 6, illustrant, en vue perspective, la liaison desdits sous-ensembles.

Afin de rendre plus concret l'objet de l'invention, on le décrit maintenant d'une manière non limitative illustrée aux figures des dessins.

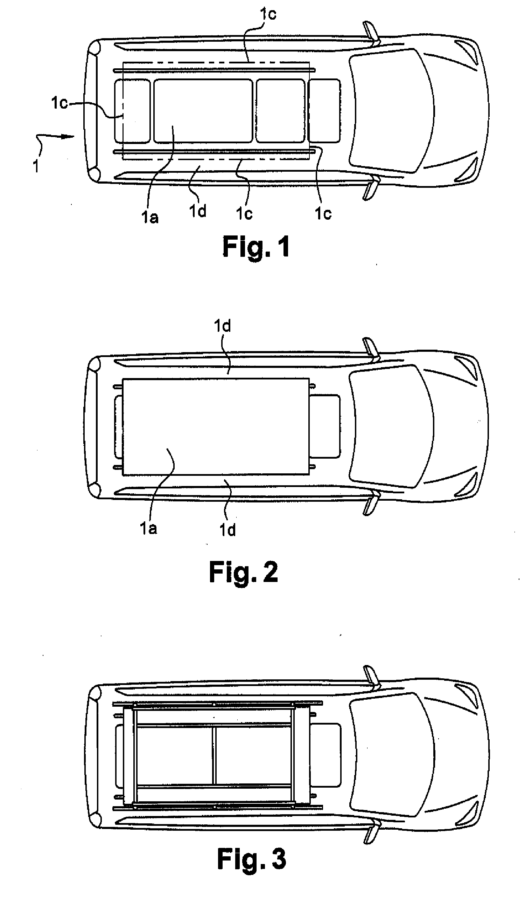

Le véhicule funéraire est référencé dans son ensemble par (1) et peut être de tout type, de toutes marques. En se référant à la figure 1, il comprend, dans sa partie supérieure, un pavillon (1a) recevant une galerie (1b) établie de manière classique avec des bordures en tubes par exemple.

L'invention vise à modifier le véhicule existant précité pour l'aménager avec une réhausse permettant d'obtenir un accroissement de la hauteur intérieure de l'ordre de 130 à 160 millimètres et avantageusement 140 mm, permettant ainsi d'offrir un espace intérieur plus approprié par le rangement de gerbes de fleurs et plus généralement des « produits » utilisés et transportés à l'occasion d'enterrement.

L'opération consiste donc à procéder au découpage du pavillon (1a) existant selon un tracé de découpe (1c) représenté figure 1, en traits interrompus courts, et en traits continus selon la figure 2. Le pourtour (1d) du pavillon défini un rebord rigide continu dont la partie inférieure peut recevoir, le cas échéant, des éléments de renforcement.

Selon l'invention, l'aménagement du véhicule funéraire, par l'adjonction d'une réhausse galerie, consiste à réaliser une structure porteuse (S) définie à partir de deux sous-ensembles (S1 - S2) réglables et ajustables l'un par rapport à l'autre pour définir l'augmentation de la hauteur requise intérieure du véhicule. Plus spécifiquement, le sous-ensemble (S1) inférieur est destiné à être fixé sur le pourtour périphérique (1d) de la partie toiture du véhicule funéraire autour de la découpe initiale du pavillon effectuée afin d'établir une base fixe de réception et d'appui du second sous-ensemble (S2). Ce dernier est susceptible, dans une première variante, d'être incorporé à la réhausse-galerie qui est rapportée et qui forme un ensemble monobloc en forme de coque (C) en polyester particulièrement ou, dans une seconde variante, être indépendant de ladite coque (C) qui est ensuite rapportée et fixée par collage ou autrement audit sous-ensemble (S2) et sur les parois du véhicule.

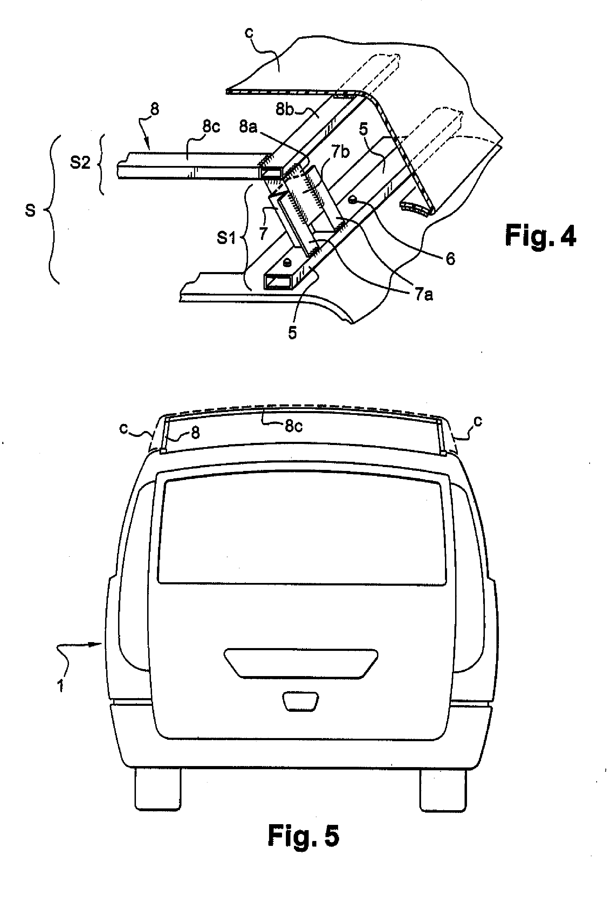

Le sous-ensemble (S1) comprend tout d'abord une base d'appui sur la toiture du véhicule, dans un plan longitudinal, le long du pourtour (1d), ladite base étant établie, par exemple, sous forme de traverse inférieure (5). Celle-ci est fixée sur le pourtour périphérique par des vis de liaison (6), par exemple, aux endroits existants pour les renforts d'origine. La traverse inférieure (5) est susceptible de recevoir plusieurs supports profilés (7) disposés perpendiculairement à ladite traverse et constituant des moyens de liaison et de réception d'éléments complémentaires établis sur le sous-ensemble (S2). Les supports profilés ont avantageusement une configuration en oméga, en étant soudés sur la traverse inférieure et présentant deux ailes (7a) débordantes et établies sur l'axe de chaque traverse inférieure. Les profilés en oméga constituent en quelque sorte des raidisseurs et contribuent à la stabilité de l'ensemble (S1 - S2) une fois monté. Ces supports profilés (7) sont régulièrement répartis le long de la traverse inférieure et on a représenté ainsi, figure 4, pour chaque traverse, l'agencement de trois supports profilés en oméga.

Ceux-ci sont agencés avec une configuration médiane en U (7b) dans laquelle s'engage par coulissement un embout (8a) parallélépipédique de forme correspondant au profil inférieur du support en oméga. Cet embout (8a) est disposé et solidaire d'un cadre porteur (8) constitutif du sous-ensemble supérieur (S2). Ce cadre comprend ainsi des traverses supérieures (8b) établies dans un plan parallèle et au-dessus des traverses inférieures précitées du sous-ensemble (S1), et de traverses transversales (8c) de liaison. Le cadre ainsi formé présente un nombre d'embouts (8a) égal à celui des supports en oméga inférieur qui les réceptionne. Le sous-ensemble (S2) ainsi défini est réglé en position par rapport au sous-ensemble récepteur (S1) inférieur, les embouts (8a) étant positionnés dans les supports profilés en oméga et fixés après réglage en hauteur par soudure ou autrement. Ainsi, le sous-ensemble (S1) comprend 6 supports en oméga, le sous-ensemble supérieur (S2) comprend 6 embouts (8a) qui seront ajustés en position puis fixés dans lesdits supports en oméga. Le réglage en hauteur est établi de toute manière appropriée en fonction des besoins et de la hauteur intérieure utile désirée.

Dans une première variante, le sous-ensemble (S2) est intégré lors du moulage de la coque constituant la réhausse-galerie de sorte qu'après ajustement du sous-ensemble (S2) dans le sous-ensemble (S1), les parois extérieures du véhicule sont parfaitement établies, des aménagements de fixation peuvent être complétés.

Le sous-ensemble (S2) est solidarisé lors du moulage de la coque réhausse-galerie en polyester en obtenant ainsi un ensemble très solide.

Dans la seconde variante, le sous-ensemble (S2) est indépendant de la coque (C). Celle-ci est rapportée après fixation des sous-ensembles (S1 - S2), puis collée sur les parties en contact du sous-ensemble (S2). Latéralement, la coque forme habillage et chapeau et vient s'ajuster et se fixer par collage sur les parois en regard du véhicule.

La tenue de l'ensemble (S) lors du déplacement et du chargement du véhicule est impeccable grâce aux liaisons fermes des sous-ensembles (S1 - S2) et grâce aussi au profil spécifique en oméga de supports profilés (7).

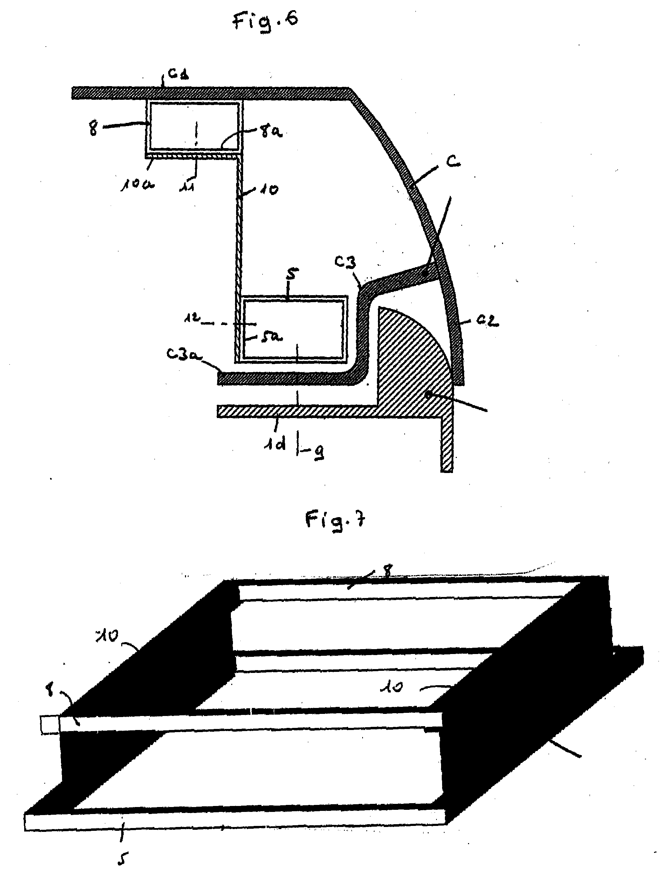

On a représenté, aux figures 6 et 7, une autre variante de réalisation de l'invention. La réhausse galerie, en forme de coque (C) est agencée pour recevoir, dans sa partie supérieure (C1), le cadre porteur (8) du sous-ensemble (S2) et présente, dans sa partie basse, d'une part une aile (C2) venant en appui extérieur sur la partie en regard du pavillon d'origine découpé et, d'autre part, une bande intérieure (C3) profilée en Z dans la partie basse (C3a) est susceptible d'être en regard du rebord du pourtour (1a) périphérique du pavillon. Le cadre inférieur (5) du sous-ensemble (S1) est susceptible de venir en appui et serrage sur ledit rebord en prenant en sandwich et serrage ladite partie basse (C3a) de la réhausse. Cette dernière est établie sur tout ou partie du pourtour périphérique du pavillon. Le cadre inférieur (5) vient en appui et serrage à l'aide de tous moyens de liaison (9) appropriés en nombre. Cette liaison s'effectue par rivetage ou autre entre ledit cadre inférieur, et le rebord du pourtour périphérique sur la partie correspondante de la bande (C3a) de la réhausse. Par ailleurs, les cadres supérieur (8) et inférieur (5) sont reliés l'un à l'autre par une plaque (10) de raccordement. Celle-ci présente une aile (10a) fixée à la face inférieure horizontale (8d) du cadre supérieur par des moyens de liaison (11) et sur le chant latéral (5a) intérieur du cadre inférieur par des moyens de liaison (12). Ces liaisons (9 - 11 - 12) sont effectuées de toutes manières appropriées par collage, rivetage ou autres. Pour assurer un réglage en hauteur de la réhausse par rapport au cadre inférieur, et cela de quelques millimètres, jusqu'à 10 ou 15mm, le chant latéral intérieur du cadre (5) est ainsi agencé avec une ou des zones de fixation à des niveaux étagés, ou avec une ou des lumières oblongues pour autoriser de tels réglages. La plaque de renforcement et de liaison (10) entre les cadres (8 - 5) contribue à la rigidité de l'ensemble.

Sans sortir du cadre de l'invention, la fixation du sous-ensemble (S1) peut être effectuée en utilisant toutes formes appropriées existantes sur la toiture du véhicule initial autour de son pavillon découpé.

Les avantages ressortent bien de l'invention. On souligne le nouveau concept de réhausse-galerie permettant d'augmenter la hauteur intérieure utile du véhicule pouvant être, par exemple, de l'ordre de 140mm. Cette augmentation de la hauteur peut, en pratique, être adaptée aux besoins et dépendre ainsi des dimensions des supports profilés (7) d'accueil des embouts (8a) du sous-ensemble supérieur (8a). L'ensemble obtenu est très solide et stable. La coque formant la réhausse-galerie forme un tout avec le véhicule et est mise en place d'une manière définitive en s'intégrant totalement audit véhicule.

## Revendications

1. Véhicule funéraire du type agencé avec découpage de son pavillon initial de l'état de véhicule initial, **caractérisé en ce qu'**il reçoit, autour de la zone découpée du pavillon (1a) initial, une structure porteuse (S) définie à partir de deux sous-ensembles (S1 - S2) réglables et ajustables l'un par rapport à l'autre pour définir une augmentation de hauteur intérieure du véhicule,
et **en ce que** le sous-ensemble (S1) inférieur est fixé sur le pourtour périphérique (1d) de la partie toiture du véhicule autour de la découpe initiale et comprend une base d'appui (5) inférieure fixée le long du pourtour (1d) entourant la zone de découpe du pavillon,
et **en ce que** le sous-ensemble (S2) est rapporté et fixé sur le sous-ensemble (S1) et est solidaire de la coque (C) formant réhausse-galerie, et comprend un cadre porteur (8), ladite coque présentant une forme périphérique extérieure s'ajustant et se fixant sur les parois du véhicule,
**et en ce que** la base d'appui (5) et le cadre porteur (8) sont solidarisés entre eux de manière réglable en position.

2. Véhicule funéraire, selon la revendication 1, **caractérisé en ce que** le sous-ensemble (S2) est directement incorporé avec la coque lors du moulage de celle-ci.

3. Véhicule funéraire, selon la revendication 1, **caractérisé en ce que** le sous-ensemble (S2) est fixé à la coque réhausse-galerie par appui de celle-ci sur les pourtours du sous-ensemble en regard en étant fixé par collage et similaire.

4. Véhicule funéraire, selon la revendication 1, **caractérisé en ce que** le sous-ensemble (S1) comprend une base d'appui établie sous forme de traverse inférieure (5) longitudinale et fixée le long du pourtour (1d) entourant la zone de découpe du pavillon, ladite traverse recevant des supports profilés (7) disposés perpendiculairement aux dites traverses et constituant des moyens de liaison et de réception d'éléments complémentaires établis sur le sous-ensemble (S2).

5. Véhicule funéraire, selon la revendication 4, **caractérisé en ce que** les supports profilés ont une configuration en oméga, en étant soudés sur la traverse inférieure et présentant deux ailes (7a) débordantes et établies sur l'axe de chaque traverse inférieure, et présentant une configuration médiane en U (7b) dans laquelle s'ajuste les éléments complémentaires de liaison du sous-ensemble (S2).

6. Véhicule funéraire, selon l'une quelconque des revendications 1, 4 et 5, **caractérisé en ce que** le sous-ensemble (S2) comprend un cadre porteur (8) avec des traverses supérieures (8b) établies dans un plan parallèle et au-dessus des traverses inférieures et des traverses transversales (8c) de liaison, et **en ce que** le cadre (8) présente des embouts (8a) de formes complémentaires aux éléments supports (7) pour s'ajuster en position par rapport à eux, et en étant fixés après ajustement.

7. Véhicule funéraire, selon la revendication 6, **caractérisé en ce que** les embouts (8a) sont fixés par soudure sur les éléments supports (7) après réglage en position.

8. Véhicule, selon la revendication 4, **caractérisé en ce que** les traverses inférieures (5) sont fixées sur le pourtour périphérique (1d) par des vis de liaison (6) aux endroits existants pour les renforts d'origine.

9. Véhicule funéraire, selon la revendication 1, **caractérisé en ce que** la réhausse galerie, en forme de coque (C) est agencée pour recevoir, dans sa partie supérieure (C1), le cadre porteur (8) du sous-ensemble (S2) et présente, dans sa partie basse, d'une part une aile (C2) venant en appui extérieur sur la partie en regard du pavillon d'origine découpé et, d'autre part, une bande intérieure (C3) profilée en Z dans la partie basse (C3a) est susceptible d'être en regard du rebord du pourtour (1a) périphérique du pavillon,
**et en ce que** le cadre inférieur (5) du sous-ensemble (S1) est susceptible de venir en appui et serrage sur ledit rebord en prenant en sandwich et serrage ladite partie basse (C3a) de la réhausse,
**et en ce que** les cadres supérieur (8) et inférieur (5) sont reliés l'un à l'autre par une plaque (10) de raccordement.

10. Véhicule funéraire, selon la revendication 9, **caractérisé en ce que** le cadre inférieur (5) vient en appui et serrage à l'aide de tous moyens de liaison (9), cette liaison s'effectuant entre ledit cadre inférieur, et le rebord du pourtour périphérique sur la partie correspondante de la bande (C3a) de la réhausse,
**et en ce que** la plaque (10) présente une aile (10a) fixée à la face inférieure horizontale (8d) du cadre supérieur par des moyens de liaison (11) et sur le chant latéral (5a) intérieur du cadre inférieur par des moyens de liaison (12).

11. Véhicule funéraire, selon la revendication 10, **caractérisé en ce que**, pour assurer un réglage en hauteur de la réhausse par rapport au cadre inférieur, le chant latéral intérieur du cadre (5) est agencé avec une ou des zones de fixation à des niveaux étagés, ou avec une ou des lumières oblongues pour autoriser de tels réglages.
